# EUROPEAN PATENT SPECIFICATION

(11) **EP 1 533 160 B1**
(45) Date of publication and mention of the grant of the patent: **16.01.2008**
(21) Application number: 03104309.4
(22) Date of filing: 21.11.2003
(51) Int. Cl.: B60J 7/043, B60J 7/04

(54) **Actuating device for an open roof construction for a vehicle**
Betätigungsvorrichtung für ein öffnungsfähiges Fahrzeugdach
Dispositif d'actionnement pour un toit ouvrant de véhicule automobile

(43) Date of publication of application: 25.05.2005
(73) Proprietor: Inalfa Roof Systems Group B.V., 5804 AH Venray (NL)
(72) Inventor: Feijts, Pascal, Jozef, Maria, 6042 JD, Roermond (NL)
(74) Representative: Voncken, Bartholomeus Maria Ch.

(56) References cited:
- WO-A-98/14342
- DE-A- 3 227 800
- DE-A- 3 248 413
- DE-A- 3 715 268
- DE-A- 4 024 753
- DE-A- 4 108 197

## Description

The invention relates to an open roof construction as defined in the preamble of claim 1.

When, in such an open roof construction the spaced-apart guide members of the linking arm are positioned in the inclined guide end section, the second end of the linking arm assumes such a position that the movable roof panel is located near to the stationary roof part. When, however, the guide members are positioned in the horizontally extending part of the guide, the linking arm has pivoted towards a position, in which the roof panel has moved away from the stationary roof part. For obtaining the desired movement of the roof panel between its two positions (i.e. firstly its position near to the stationary roof part and secondly its position distanced therefrom) the guide end section must have a large inclination relative to said horizontal extension, whereas further a rather short distance is selected between both guide members of the linking arm. Finally the distance between the second end of the linking arm and the line connecting said guide members is selected rather large. However, a disadvantage of such a selection of parameters is, that large forces are created imposing strong stresses on the construction.

A known open roof construction of such a type is described in German patent DE 4024753, in which a torsion spring is applied at the location where the second end of the linking arm is pivotably attached to the roof panel. Said torsion spring is meant for supporting the movement of the roof panel from its nearby position towards its distanced position. However, such a torsion spring will counteract the reversed movement, which thus requires a relatively large force. A further disadvantage of such a known construction is, that once the roof panel has left its position adjacent to the stationary roof part, its movement occurs in an uncontrolled manner due to the force of the torsion spring. Finally, such a known open roof construction needs additional locking means for locking the roof panel in its extreme positions.

It is an object of the present invention to provide an open roof construction of the type referred to above which does not suffer from the above disadvantages.

Thus, in accordance with the present invention there is provided an open roof construction for a vehicle, comprising a movable roof panel for opening and closing a roof opening provided in a stationary roof part of said vehicle, wherein at two opposite sides of said roof opening guides are provided in which linking members are slidable linking the roof panel with the guides, and wherein each linking member comprises a linking arm having a first end with two spaced-apart guide members housed in the guide and a second end positioned outside the line connecting said guide members and attached pivotably to the roof panel, and wherein further the guide extends substantially horizontally but for at least one guide end section extending inclined relative to said horizontal extension, characterized in that the linking member further comprises a driven slide housed in the guide, wherein the slide is movably connected to the linking arm at a location positioned at the same side outside of the line connecting said guide members as the second end of the linking arm.

Because the slide is movably connected to the linking arm at a location positioned at the same side outside of the line connecting said guide members as the second end of the linking arm, a driven movement of the slide relative to the guide (for example when the slide is driven by a drive cable or alike) not only will lead to a corresponding movement of the linking arm relative to the guide, but also will lead to the creation of a moment which supports the desired rotation of the linking arm during its transition from the inclined guide end section towards the horizontally extending guide section and vice versa. Thus, the provision of a torsion spring or any other member for supporting the movement of the roof panel is no longer needed.

In a preferred embodiment of the open roof construction according tot the present invention the movable connection between the slide and the linking arm comprises a curve track on one of the slide and linking arm and a curve follower means on the other of the slide and linking arm. More preferably, the slide comprises the curve track and the linking arm comprises the follower means.

Such a combination of curve track and curve follower means combines the features of effectively transmitting driving forces from one member to the other while allowing an appropriate relative movement therebetween.

When, according to a further preferred embodiment of the open roof construction in accordance with the present invention, two parallel curve tracks are provided in a forked part of the slide, wherein the linking arm is partly received within the forked part, whereas its follower means comprises a pin traversing the linking arm and forked part, only symmetrical loads are generated, thus preventing a distortion of the linking member and the creation of additional friction with related additional wear.

In yet another preferred embodiment of the open roof construction in accordance with the present invention the curve track comprises a central section inclined relative to said horizontal extension of the guide and two end sections extending in parallel to said horizontal extension. When the curve follower means of the linking arm is positioned in one of said two end sections, a self-locking of the linking arm is obtained, whereas in the central section of the curve track such a self-locking does not occur.

For obtaining a stable position of the slide within the guide, preferably said guide comprises two guide channels positioned one above the other and interconnected by a connecting passage, whereas the slide likewise comprises two interconnected slide shoes positioned one above the other. When, in such a case, a drive cable for driving the slide is applied, said drive cable may be positioned alongside one of said guide channels (for example in a dedicated channel).

The present invention is applicable to many different open roof constructions, but preferably an open roof construction of the type, where the roof opening comprises two roof openings separated by a central stationary roof section, and wherein the left and right roof opening each are provided with a movable roof panel, both roof panels being movable between a position closing the respective roof openings and a position freeing said roof openings while being stacked one above the other above the central stationary roof section, wherein the linking members of each roof panel are positioned at the outer ends of its edge that faces away from the central stationary roof section.

More specifically, the invention may relate to an open roof construction, in which the roof openings comprise left and right roof openings separated by a longitudinally extending central stationary roof section, and wherein the respective roof panels are movable transversally.

Hereinafter the invention will be elucidated referring to the drawing, in which an embodiment of the open roof construction is accordance with the present invention is illustrated.
Figure 1 shows, in a perspective view, an embodiment of an open roof construction for a vehicle in a closed position;
figure 2 shows, in a corresponding manner, the open roof construction of figure 1 in an open position;
figure 3 shows a detail of the open roof construction illustrated in figure 1, illustrating a linking member;
figures 4-9 show the operation of the linking member of figure 3 in a number of successive stages during opening the open roof construction of figure 1, and
figure 10 shows a section according to X-X in figure 3.

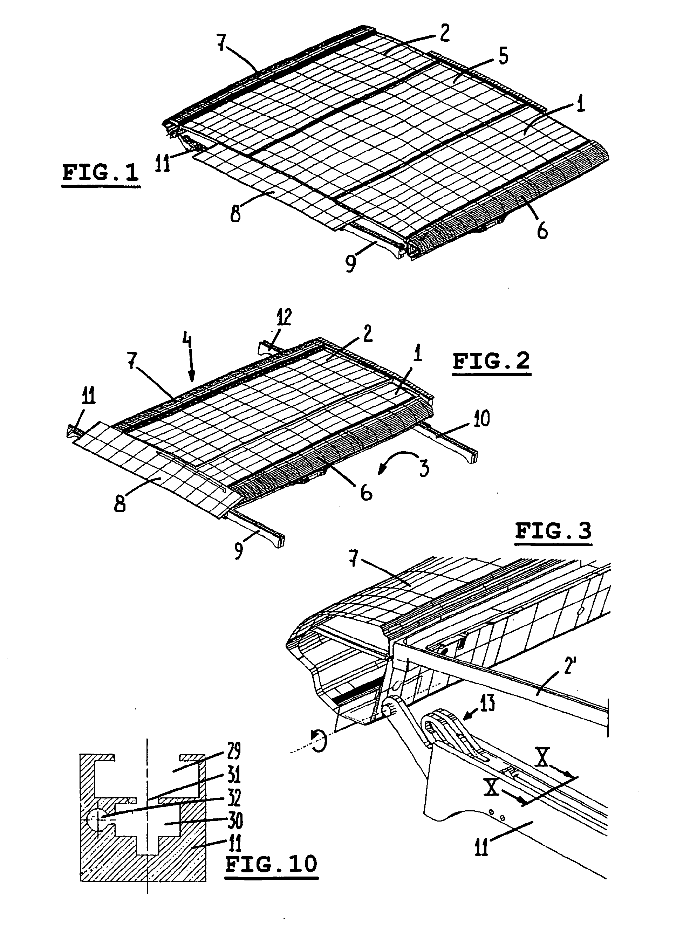

Firstly referring to figure 1, an open roof construction for provision in a vehicle is illustrated in a perspective view. Basically, the illustrated open roof construction comprises a left movable roof panel 1 and a right movable roof panel 2. The left movable roof panel 1 is meant for opening and closing a left roof opening 3 (figure 2), whereas likewise the right movable roof panel 2 is meant for closing and opening a right roof opening 4 (figure 2). The left and right roof openings 3,4 are provided in a stationary roof part of the vehicle, of which stationary roof part only a central stationary roof section 5 is illustrated separating the left and right roof openings 3, 4.

The left and right movable roof panels 1, 2, the left and right roof openings 3, 4 and the central stationary roof section 5 all extend longitudinally with respect to the vehicle.

In figure 1 the left and right movable roof panels 1, 2 close the respective left and right roof openings 3, 4. In figure 2, however, the left and right movable roof panels 1, 2 have been moved transversally to a position in which they are stacked one above the other above the central stationary roof section 5 (not visible in figure 2).

At their longitudinal outer edges the left and right movable roof panels 1, 2 are provided with end members 6, 7 which in the closed position illustrated in figure 1 engage or nearly engage adjacent parts of the vehicle, for example doors (not shown). At the front of the illustrated open roof construction a movable wind deflector 8 is illustrated.

For being movable between their position closing the respective left and right roof openings 3, 4 and a position freeing said roof openings, the left and right movable roof panels 1, 2 cooperate with transversely extending guides 9-12. The present invention deals with linking members for slidably linking the outer ends of the respective edges of the panels facing away from the central stationary roof section 5 to the guides 9-12.

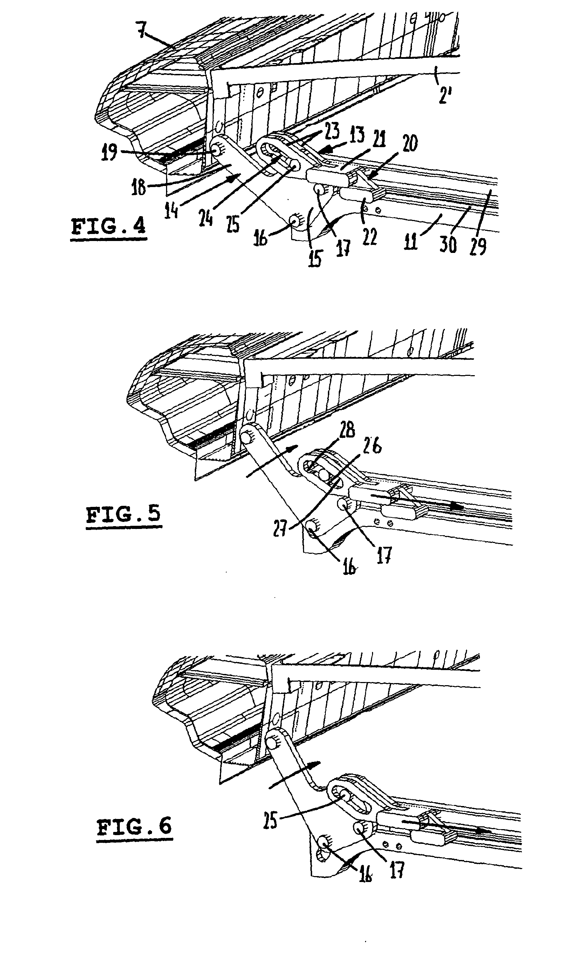

Figure 3 illustrates, on a larger scale, a linking member 13 which is slidable in a guide 11 and which is attached pivotably to the right movable roof panel 2, of which in figure 3 only a frame 2' is shown. In figure 3, the guide 11 is illustrated in its entirety. Figure 4, however, illustrates a situation corresponding with figure 3, in which one half of the guide 11 has been omitted for clearly illustrating the linking member 13. In figure 3 and 4, the respective roof panel 2 (frame 2') is in its closed position. In this position the linking member 13 occupies an extreme position in the guide 11.

Again referring to figure 4, the linking member 13 is provided with a linking arm 14 having a first end 15 with two spaced-apart guide members 16, 17 housed in the guide 11. The linking arm 14 further comprises a second end 18 positioned outside an imaginary line connecting said guide members 16 and 17 and provided with a pivot 19 for pivotably connecting the linking arm 14 with the right movable roof panel 2.

The linking member 13 further comprises a slide 20 with interconnected upper and lower slide shoes 21 and 22, respectively. The slide 20 further comprises a forked part 23 in which two curve tracks 24 are provided.

The linking arm 14 comprises curve follower means cooperating with the curve tracks 24. In the illustrated embodiment, said curve follower means comprise a pin 25 traversing the linking arm 14 and the forked part 23.

As can be seen best in figure 5, each curve track 24 comprises a central section 26 inclined relative to the main direction of the guide 11 (which main direction preferably is horizontally), and two end sections 27 and 28 extending in parallel to the guide 11.

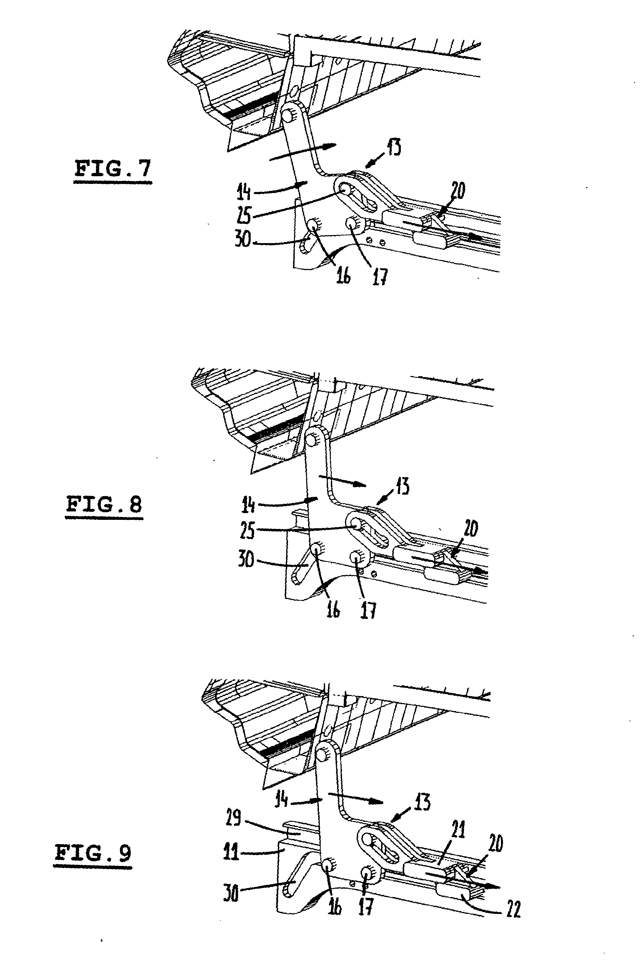

As is illustrated best in figure 9 (and, of course, figure 10) each guide 9-12 comprises an upper guide channel 29 for receiving the upper slide shoe 21 of slide 20 and a lower guide channel 30 for receiving the lower slide shoe 22 and the guide members 16 and 17 of the linking arm 14. At its end facing away from the central stationary roof section 5 the lower guide channel 30 of each guide 9-12 is provided with a guide end section extending inclined relative to the remainder of said guide.

In figure 4, the guide members 16 and 17 of the linking arm 14 are positioned in the inclined guide end section of the lower guide channel 30 (it is noted, however, that guide member 17 also can be positioned at the intersection between the guide end section and the horizontally extending section of the lower guide channel 30). In this position, the pivot 19 of the linking arm 14 has reached its lowermost position, in which position the right roof panel 2 closes the corresponding right roof opening 4. The pin 25 is positioned in the lowermost end section 27 of the curve tracks 24 of the slide 20.

Again referring to figure 10, a connecting passage 31 is illustrated connecting the upper guide channel 29 and lower guide channel 30. Further a channel 32 is illustrated in which a drive cable (not illustrated) can be received for driving the slide 20 to and fro in the respective guide 9-12. When, starting in the position illustrated in figure 4 the slide 20 is moved to the right (for example by means of such a drive cable) the pin 25 of the linking arm 14 will move out of the end section 27 of the curve tracks 24 and will reach the inclined central section 26 of the curve tracks 24. Simultaneously the linking arm 14 is gradually moved out of the inclined guide end section of the lower channel 30 while gradually rotating (clockwise in the figures).

The shape of the curve tracks 24 and the shape of the lower guide channel 30 are closely related to each other, allowing a movement of the linking arm 14 as illustrated in the successive figures 4 until 9. During such a movement of the linking arm, it rotates to a fully upwardly extending position as illustrated in figure 8, in which the pin 25 has reached the upper end section 28 of the curved tracks 24. In such a position the right movable roof panel 2 has been lifted, and thereafter the entire assembly of linking member 13 and roof panel 2 maybe moved further along the guide 11 as illustrated in figure 9.

For again closing the roof panel a reversed movement will be followed.

As mentioned before the pin 25 of the linking arm 14 is positioned in the horizontally extending end section 27 of the curve tracks 24 when the roof panel is entirely closed. As a result, any forces acting on the panel for opening it will not result in forces trying to move the slide 20 relative to the guide 11. Thus, this situation is self-locking. The same applies for the situation illustrated in figure 8 and 9, because in this situation pin 25 is received in the upper horizontally extending end section 28, such that any effort for trying to close the panel (which would mean a rotation of the linking arm 14) cannot result in forces acting on the slide 21 in parallel to the guide 11.

The invention is not limited to the embodiment described before which may be varied widely within the scope of the invention as defined by the appending claims.

## Claims

1. Open roof construction for a vehicle, comprising a movable roof panel (1,2) for opening and closing a roof opening (3,4) provided in a stationary roof part of said vehicle, wherein at two opposite sides of said roof opening guides (11) are provided in which linking members (13) are slidable linking the roof panel (1,2) with the guides (11), and wherein each linking member (13) comprises a linking arm having a first end (15) with two spaced-apart guide members (16,17) housed in the guide (11) and a second end (18) positioned outside the line connecting said guide members and attached pivotably to the roof panel (12), and wherein further the guide (11) extends substantially horizontally but for at least one guide end section extending inclined relative to said horizontal extension, **characterized in that** the linking member (13) further comprises a driven slide (20) housed in the guide, wherein the slide is movably connected to the linking arm (14) at a location positioned at the same side outside of the line connecting said guide members (16,17) as the second end of the linking arm.

2. Open roof construction according to claim 1, wherein the movable connection between the slide (20) and the linking arm (14) comprises a curve track (24) on one of the slide (20) and linking arm (14) and a curve follower means (25) on the other of the slide and linking arm.

3. Open roof construction according to claim 2, wherein the slide (20) comprises the curve track (24) and the linking arm (14) comprises the follower means (25).

4. Open roof construction according to claim 3, wherein two parallel curve tracks are provided in a forked part (23) of the slide, and wherein the linking arm (14) is partly received within the forked part, whereas its follower means comprises a pin (25) traversing the linking arm and forked part.

5. Open roof construction according to claim 3 or 4, wherein the curve track comprises a central section (26) inclined relative to said horizontal extension of the guide (11) and two end sections (27,28) extending in parallel to said horizontal extension.

6. Open roof construction according to any of the previous claims, wherein the guide (11) comprises two guide channels (29,30) positioned one above the other and interconnected by a connecting passage (31), whereas the slide likewise comprises two interconnected slide shoes (21,22) positioned one above the other.

7. Open roof construction according to any of the preceding claims, wherein the roof opening comprises two roof openings (3,4) separated by a central stationary roof (5) section, and wherein the roof openings each are provided with a movable roof panel (1,2), both roof panels being movable between a position closing the respective roof openings and a position freeing said roof openings while being stacked one above the other above the central stationary roof section (5), wherein the linking members (13) of each roof panel (1,2) are positioned at the outer ends of its edge that faces away from the central stationary roof section (5).

8. Open roof construction according to claim 7, wherein the roof openings comprise left and right roof openings separated by a longitudinally extending central stationary roof section, and wherein the respective roof panels are movable transversally.

## Patentansprüche

1. Offendachkonstruktion für ein Fahrzeug, die ein bewegbares Dachpaneel (1, 2) zum Öffnen und zum Schließen einer in einem stationären Dachteil des Fahrzeugs vorgesehnen Dachöffnung (3, 4) aufweist, wobei auf zwei gegenüberliegenden Seiten der Dachöffnung Führungen (11) vorgesehen sind, in welchen Anschlusselemente (13) das Dachpaneel (1, 2) verschiebbar an den Führungen anschließen und wobei jedes Anschlusselement (13) einen Anschlussarm aufweist, der ein erstes Ende (15) mit zwei im Abstand voneinander angeordneten Führungselementen (16, 17), die in der Führung (11) untergebracht sind, und ein zweites Ende (18) hat, das außerhalb der die Führungselemente verbindenden Linie positioniert ist und an dem Dachpaneel (12) schwenkbar angebracht ist, und wobei ferner die Führung (11) sich im wesentlichen horizontal erstreckt, wobei sich jedoch mindestens ein Führungsendabschnitt relativ zu der horizontalen Erstreckung geneigt erstreckt, **dadurch gekennzeichnet, dass** das Anschlusselement (13) ferner einen Antriebsläufer (20) aufweist, der in der Führung untergebracht ist, wobei der Läufer an dem Anschlussarm (14) an einer Stelle bewegbar angeschlossen ist, die auf derselben Seite außerhalb der die Führungselemente (16, 17) verbindenden Linie wie das zweite Ende des Anschlussarmes positioniert ist.

2. Offendach-Konstruktion gemäß Anspruch 1, wobei der bewegbare Anschluss zwischen dem Läufer (20) und dem Anschlussarm (14) an einem von dem Läufer (20) und von dem Anschlussarm (14) eine Kurvenbahn (24) und an dem anderen von dem Läufer und dem Anschlussarm ein Kurvenfolgemittel (25) aufweist.

3. Offendach-Konstruktion gemäß Anspruch 2, wobei der Läufer (20) die Kurvenbahn (24) und der Anschlussarm (14) das Folgemittel (25) aufweist.

4. Offendach-Konstruktion gemäß Anspruch 3, wobei zwei parallele Kurvenbahnen in einem gegabelten Teil (23) des Läufers vorgesehen sind und wobei der Anschlussarm (14) teilweise in dem gegabelten Teil aufgenommen ist, wobei sein Folgemittel einen Stift (25) aufweist, der den Anschlussarm und den gegabelten Teil durchdringt.

5. Offendach-Konstruktion gemäß Anspruch 3 oder 4, wobei die Kurvenbahn einen Zentralabschnitt (26), der relativ zu der horizontalen Erstreckung der Führung (11) geneigt ist, und zwei Endabschnitte (27, 28) aufweist, die sich parallel zu der horizontalen Erstreckung erstrecken.

6. Offendach-Konstruktion gemäß einem der vorherigen Ansprüche, wobei die Führung (11) zwei Führungskanäle (29, 30) aufweist, die übereinander positioniert sind und mittels einer Anschlusspassage (31) miteinander verbunden sind, wobei der Läufer ebenfalls zwei miteinander verbundene Gleitschuhe (21, 22) aufweist, die übereinander positioniert sind.

7. Offendach-Konstruktion gemäß einem der vorherigen Ansprüche, wobei die Dachöffnung zwei Dachöffnungen (3, 4) aufweist, die von einem zentralen, stationären Dachabschnitt (5) voneinander getrennt sind, und wobei die Dachöffnungen jeweils mit einem bewegbaren Dachpaneel (1, 2) versehen sind, wobei beide Dachpaneele zwischen einer Position, die die jeweiligen Dachöffnungen schließt, und einer Position bewegbar sind, die die Dachöffnungen freigibt, wobei sie über dem zentralen, stationären Dachabschnitt (5) übereinander gestapelt sind, wobei die Anschlusselemente (13) jedes Dachpaneel (1, 2) an den Außenenden seines Rand positioniert sind, der von dem zentralen, stationären Dachabschnitt (5) weg zeigt.

8. Offendach-Konstruktion gemäß Anspruch 7, wobei die Dachöffnungen von einem sich längs erstreckenden, stationären, zentralen Dachabschnitt getrennte linke und rechte Dachöffnungen aufweist und wobei die jeweiligen Dachpaneele quer bewegbar sind.

## Revendications

1. Construction de toit ouvrant pour un véhicule, comprenant un panneau de toit mobile (12) pour l'ouverture et la fermeture d'une ouverture de toit (3, 4), disposée dans une partie de toit stationnaire dudit véhicule, dans lequel, sur les deux côtés opposés de ladite ouverture de toit, sont disposés des guidages (11) dans lesquels des éléments d'articulation (13) articulent de façon coulissante le panneau de toit (1, 2) avec les guidages (11), et dans lequel chaque élément d'articulation (13) comprend un bras d'articulation ayant une première extrémité (15) avec deux éléments de guidage séparés entre eux (16, 17) logés dans le guidage (11) et une seconde extrémité (18) positionnée à l'extérieur de la ligne reliant lesdits éléments de guidage et fixée de façon pivotante sur le panneau de toit (12), et dans lequel, de plus, le guidage (11) s'étend sensiblement horizontalement mais pour au moins une section d'extrémité de guidage s'étendant de façon inclinée par rapport audit prolongement horizontal, **caractérisée en ce que** l'élément d'articulation (13) comprend, de plus, une glissière commandée (20), logée dans le guidage, dans lequel la glissière est raccordée de façon mobile au bras d'articulation (14) en une position située sur le même côté à l'extérieur de la ligne raccordant lesdits éléments de guidage (16, 17) en tant que seconde extrémité du bras d'articulation.

2. Construction de toit ouvrant selon la revendication 1, dans laquelle la liaison mobile entre la glissière (20) et le bras d'articulation (14) comprend une voie incurvée (24) sur l'une de la glissière (20) et du bras d'articulation (14) et des moyens de suivi de courbe (25) de l'autre côté de la glissière et du bras d'articulation.

3. Construction de toit ouvrant selon la revendication 2, dans laquelle la glissière (20) comprend la voie incurvée (24) et le bras d'articulation (14) comprend les moyens de suivi (25).

4. Construction de toit ouvrant selon la revendication 3, dans laquelle deux voies incurvées parallèles sont disposées dans une partie de fourche (23) de la glissière, et dans laquelle le bras d'articulation (14) est partiellement logé à l'intérieur de la partie de fourche, dans lequel ses moyens suiveurs comprennent une goupille (25) traversant le bras d'articulation et la partie de fourche.

5. Construction de toit ouvrant selon la revendication 3 ou 4, dans laquelle la voie incurvée comprend une section centrale (26) inclinée par rapport audit prolongement horizontal du guidage (11) et deux sections d'extrémité (27, 28) s'étendant parallèlement audit prolongement horizontal.

6. Construction de toit ouvrant selon l'une quelconque des revendications précédentes, dans laquelle le guidage (11) comprend deux canaux de guidage (29, 30) positionnés l'un au-dessus de l'autre et reliés entre eux par un passage de liaison (31), tandis que la glissière comprend de même deux contacts coulissants reliés entre eux (21, 22) et positionnés l'un au-dessus de l'autre.

7. Construction de toit ouvrant selon l'une quelconque des revendications précédentes, dans laquelle l'ouverture de toit comprend deux ouvertures de toit (3, 4) séparées par une section de toit stationnaire centrale (5), et dans laquelle les ouvertures de toit sont chacune munies d'un panneau de toit mobile (1, 2), les deux panneaux de toit étant mobiles entre une position fermant les ouvertures de toit respectives et une position libérant lesdites ouvertures de toit, tout en étant empilés l'un au-dessus de l'autre au-dessus de la section de toit stationnaire (5), dans lequel les éléments d'articulation (13) de chaque panneau de toit (1, 2) sont positionnés sur les extrémités extérieures de son bord qui est détourné de la section de toit stationnaire centrale (5).

8. Construction de toit ouvrant selon la revendication 7, dans laquelle les ouvertures de toit comprennent des ouvertures de toit gauche et droite séparées par une section de toit stationnaire centrale s'étendant longitudinalement, et dans laquelle les panneaux de toit respectifs sont mobiles transversalement.
